# EUROPEAN PATENT APPLICATION

(11) **EP 4 818 784 A1**
(43) Date of publication of application: **07.10.2026**
(21) Application number: 24911076.8
(22) Date of filing: 23.12.2024
(51) Int. Cl.: G02B 13/00, G02B 13/18

(54) **OPTICAL LENS AND OPTICAL IMAGING APPARATUS**

(30) Priority: 28.12.2023 CN 202311848579
(71) Applicant: Yinwang Intelligent Technologies Co., Ltd., Shenzhen, Guangdong 518110 (CN)
(72) Inventor: ZHANG, Shaopeng, Shenzhen, Guangdong 518129 (CN); ZHENG, Bin, Shenzhen, Guangdong 518129 (CN)
(74) Representative: Pfenning, Meinig & Partner mbB
(86) International application number: PCT/CN2024/141641
(87) International publication number: WO 2025/140149

(57) **Abstract**

An optical lens assembly and an optical imaging apparatus are provided. The optical lens assembly includes: a first lens (L1), a second lens (L2), a third lens (L3), and a fourth lens (L4) that are sequentially coaxially disposed from an object side to an image side. The first lens (L1), the third lens (L3), and the fourth lens (L4) have positive focal power, and the second lens (L2) has negative focal power; and the first lens (L1) is a meniscus lens, the second lens (L2) is a double-concave lens, the third lens (L3) is a meniscus lens, and the fourth lens (L4) is a meniscus lens. The optical lens assembly uses an optical architecture of four lenses (L1, L2, L3, and L4). The four lenses (L1, L2, L3, and L4) are shaped and focal power is appropriately allocated, so that a system aberration introduced by a wide aperture can be reduced, to implement high image resolution performance of the optical lens assembly in the wide aperture.

## Description

This application claims priority to Chinese Patent Application No. 202311848579.2, filed with the China National Intellectual Property Administration on December 28, 2023 and entitled "OPTICAL LENS ASSEMBLY AND OPTICAL IMAGING APPARATUS", which is incorporated herein by reference in its entirety.

### TECHNICAL FIELD

This application relates to the field of optical imaging technologies, and in particular, to an optical lens assembly and an optical imaging apparatus.

### BACKGROUND

An aperture is an apparatus configured to control an amount of light entering a photosensitive surface of a body of a camera through a lens assembly. Generally, an aperture size is determined by an aperture and a focal length of the lens assembly. A wider aperture of the lens assembly indicates a larger amount of light entering through the aperture in a unit time, more information obtained by a photosensitive element, and better final imaging effect.

However, a wide aperture design usually increases design complexity of an optical system and introduces a larger system aberration.

Therefore, how to reduce the aberration introduced by the wide aperture is a hot topic that is being studied by persons skilled in the art.

### SUMMARY

Embodiments of this application provide an optical lens assembly and an optical imaging apparatus, to reduce an aberration introduced by a wide aperture.

**According to a first aspect**, an embodiment of this application provides an optical lens assembly. The optical lens assembly includes:
a first lens, a second lens, a third lens, and a fourth lens that are sequentially coaxially disposed from an object side to an image side.

The first lens, the third lens, and the fourth lens have positive focal power, and the second lens has negative focal power.

The first lens is a meniscus lens, the second lens is a double-concave lens, the third lens is a meniscus lens, and the fourth lens is a meniscus lens.

In this embodiment of this application, the optical lens assembly is provided. The first lens in the optical lens assembly is a meniscus lens with positive focal power, and can collect light in a field of view as much as possible, so that more light enters a rear optical system, and a lens diameter of the second lens can be reduced. The second lens in the optical lens assembly is a double-concave lens with negative focal power, helping smoothly transfer the light collected by the first lens to the third lens, and increase a depth of field (depth of field, DOF) of the optical lens assembly. The third lens in the optical lens assembly is a meniscus lens with positive focal power, so that light can be better converged. This helps reduce a system aberration, and reduce distortion, thereby improving an image resolution capability of the optical lens assembly. The fourth lens in the optical lens assembly is a meniscus lens with positive focal power, and can quickly converge the light collected in front to the rear optical system. In this embodiment of this application, an optical architecture of four lenses is used. The four lenses are shaped and focal power is appropriately allocated, so that a system aberration introduced by a wide aperture can be reduced, to implement high image resolution performance of the optical lens assembly in the wide aperture, and reduce a volume of the optical lens assembly.

In a possible implementation, an object side surface of the first lens is a convex surface, and an image side surface of the first lens is a concave surface; an object side surface of the second lens is a concave surface, and an image side surface of the second lens is a concave surface; an object side surface of the third lens is a concave surface, and an image side surface of the third lens is a convex surface; and an object side surface of the fourth lens is a convex surface, and an image side surface of the fourth lens is a concave surface.

In this implementation of this application, a possible specific implementation of the first lens, the second lens, the third lens, and the fourth lens is provided. Specifically, the object side surface of the first lens is a convex surface, and the image side surface is a concave surface. The first lens is disposed as a meniscus lens with positive focal power and whose convex surface faces the object side, and can collect light in the field of view as much as possible, so that more light enters the rear optical system, and the lens diameter of the second lens can be reduced. The object side surface of the second lens is a concave surface, and the image side surface is a concave surface. The second lens is disposed as a double-concave lens with negative focal power, so that the light collected by the first lens can be smoothly transferred to the third lens. In addition, this helps increase the DOF of the optical lens assembly, improve an assembly yield of each lens, and ensure sensitivity of the lens. The object side surface of the third lens is a concave surface, and the image side surface is a convex surface. The third lens is disposed as a meniscus lens with positive focal power and whose convex surface faces the image side, so that light can be better converged. This helps reduce the system aberration, and reduce the distortion, thereby improving the image resolution capability of the optical lens assembly. The object side surface of the fourth lens is a convex surface, and the image side surface is a concave surface. The fourth lens is disposed as a meniscus lens with positive focal power and whose convex surface faces the object side, and can quickly converge the light collected in front to the rear optical system.

In a possible implementation, the third lens is an aspheric lens.

In this implementation of this application, a possible specific implementation of the third lens is provided. Specifically, the third lens is an aspheric lens. A feature of the aspheric lens is that a curvature from a center of the lens to a periphery continuously changes. Different from a spherical lens with a constant curvature from a center of the lens to a periphery, the aspheric lens has a better curvature radius feature and a larger degree of freedom, and has advantages of reducing a distortion aberration and reducing an astigmatic aberration. After the aspheric lens is used for the third lens, light convergence effect is better, and an aberration that occurs during imaging can be eliminated as much as possible, to improve imaging quality of the optical lens assembly.

In a possible implementation, the optical lens assembly further includes:
a light filter.

The light filter is located on an object side of the first lens.

In this implementation of this application, a possible specific implementation of the optical lens assembly is provided. Specifically, the optical lens assembly further includes the light filter, and the light filter is located on the object side of the first lens. The light filter is a colored transparent sheet that has a function of absorbing, reflecting, and transmitting colored light, and can filter out unnecessary noise from light before the light enters the first lens, to correct a color deviation.

**According to a second aspect**, an embodiment of this application provides an optical lens assembly. The optical lens assembly includes:
a first lens, a second lens, a third lens, and a fourth lens that are sequentially coaxially disposed from an object side to an image side.

The first lens, the third lens, and the fourth lens have positive focal power, and the second lens has negative focal power.

The first lens is a double-convex lens, the second lens is a double-concave lens, the third lens is a meniscus lens, and the fourth lens is a meniscus lens.

In this embodiment of this application, the optical lens assembly is provided. The first lens in the optical lens assembly is a double-convex lens with positive focal power, and can collect light in a field of view as much as possible, so that more light enters a rear optical system, and a lens diameter of the second lens can be reduced. The second lens in the optical lens assembly is a double-concave lens with negative focal power, helping smoothly transfer the light collected by the first lens to the third lens, and increase a depth of field DOF of the optical lens assembly. The third lens in the optical lens assembly is a meniscus lens with positive focal power, so that light can be better converged. This helps reduce a system aberration, and reduce distortion, thereby improving an image resolution capability of the optical lens assembly. The fourth lens in the optical lens assembly is a meniscus lens with positive focal power, and can quickly converge the light collected in front to the rear optical system. In this embodiment of this application, an optical architecture of four lenses is used. The four lenses are shaped and focal power is appropriately allocated, so that a system aberration introduced by a wide aperture can be reduced, to implement high image resolution performance of the optical lens assembly in the wide aperture, and reduce a volume of the optical lens assembly.

In a possible implementation, an object side surface of the first lens is a convex surface, and an image side surface of the first lens is a convex surface; an object side surface of the second lens is a concave surface, and an image side surface of the second lens is a concave surface; an object side surface of the third lens is a concave surface, and an image side surface of the third lens is a convex surface; and an object side surface of the fourth lens is a convex surface, and an image side surface of the fourth lens is a concave surface.

In this implementation of this application, a possible specific implementation of the first lens, the second lens, the third lens, and the fourth lens is provided. Specifically, the object side surface of the first lens is a convex surface, and the image side surface is a convex surface. The first lens is disposed as a double-convex lens with positive focal power, and can collect light in the field of view as much as possible, so that more light enters the rear optical system, and the lens diameter of the second lens can be reduced. The object side surface of the second lens is a concave surface, and the image side surface is a concave surface. The second lens is disposed as a double-concave lens with negative focal power, so that the light collected by the first lens can be smoothly transferred to the third lens. In addition, this helps increase the DOF of the optical lens assembly, improve an assembly yield of each lens, and ensure sensitivity of the lens. The object side surface of the third lens is a concave surface, and the image side surface is a convex surface. The third lens is disposed as a meniscus lens with positive focal power and whose convex surface faces the image side, so that light can be better converged. This helps reduce the system aberration, and reduce the distortion, thereby improving the image resolution capability of the optical lens assembly. The object side surface of the fourth lens is a convex surface, and the image side surface is a concave surface. The fourth lens is disposed as a meniscus lens with positive focal power and whose convex surface faces the object side, and can quickly converge the light collected in front to the rear optical system.

In a possible implementation, the first lens is an aspheric lens, and the third lens is an aspheric lens.

In this implementation of this application, a possible specific implementation of the first lens and the third lens is provided. Specifically, the first lens is an aspheric lens, and the third lens is an aspheric lens. A feature of the aspheric lens is that a curvature from a center of the lens to a periphery continuously changes. Different from a spherical lens with a constant curvature from a center of the lens to a periphery, the aspheric lens has a better curvature radius feature and a larger degree of freedom, and has advantages of reducing a distortion aberration and reducing an astigmatic aberration. After the aspheric lens is used for the first lens and the third lens, light convergence effect is better, and an aberration that occurs during imaging can be eliminated as much as possible, to improve imaging quality of the optical lens assembly.

In a possible implementation, the optical lens assembly further includes:
a light filter.

The light filter is located on an image side of the first lens and an object side of the second lens.

In this implementation of this application, a possible specific implementation of the optical lens assembly is provided. Specifically, the optical lens assembly further includes the light filter, and the light filter is located on the object side of the first lens and the object side of the second lens. The light filter is a colored transparent sheet that has a function of absorbing, reflecting, and transmitting colored light, and can filter out unnecessary noise from light before the light enters the second lens, to correct a color deviation. In addition, the light filter is disposed inside the optical lens assembly and between the lenses, so that a clear aperture can be reduced, helping reduce costs of a material used to control the clear aperture.

**According to a third aspect**, an embodiment of this application provides an optical lens assembly. The optical lens assembly includes:
a first lens, a second lens, a third lens, and a fourth lens that are sequentially coaxially disposed from an object side to an image side.

The first lens, the third lens, and the fourth lens have positive focal power, and the second lens has negative focal power.

The first lens is a planoconvex lens, the second lens is a meniscus lens, the third lens is a meniscus lens, and the fourth lens is a meniscus lens.

In this embodiment of this application, the optical lens assembly is provided. The first lens in the optical lens assembly is a planoconvex lens with positive focal power, and can collect light in a field of view as much as possible, so that more light enters a rear optical system, and a lens diameter of the second lens can be reduced. The second lens in the optical lens assembly is a meniscus lens with negative focal power, helping smoothly transfer the light collected by the first lens to the third lens, and increase a DOF of the optical lens assembly. The third lens in the optical lens assembly is a meniscus lens with positive focal power, so that light can be better converged. This helps reduce a system aberration, and reduce distortion, thereby improving an image resolution capability of the optical lens assembly. The fourth lens in the optical lens assembly is a meniscus lens with positive focal power, and can quickly converge the light collected in front to the rear optical system. In this embodiment of this application, an optical architecture of four lenses is used. The four lenses are shaped and focal power is appropriately allocated, so that a system aberration introduced by a wide aperture can be reduced, to implement high image resolution performance of the optical lens assembly in the wide aperture, and reduce a volume of the optical lens assembly.

In a possible implementation, an object side surface of the first lens is a convex surface, and an image side surface of the first lens is a plane; an object side surface of the second lens is a concave surface, and an image side surface of the second lens is a convex surface; an object side surface of the third lens is a concave surface, and an image side surface of the third lens is a convex surface; and an object side surface of the fourth lens is a convex surface, and an image side surface of the fourth lens is a concave surface.

In this implementation of this application, a possible specific implementation of the first lens, the second lens, the third lens, and the fourth lens is provided. Specifically, the object side surface of the first lens is a convex surface, and the image side surface is a plane. The first lens is disposed as a planoconvex lens with positive focal power and whose convex surface faces the object side, and can collect light in the field of view as much as possible, so that more light enters the rear optical system, and the lens diameter of the second lens can be reduced. The object side surface of the second lens is a convex surface, and the image side surface is a concave surface. The second lens is disposed as a lens with negative focal power and whose convex surface faces the image side, so that the light collected by the first lens can be smoothly transferred to the third lens. In addition, this helps increase the DOF of the optical lens assembly, improve an assembly yield of each lens, and ensure sensitivity of the lens. The object side surface of the third lens is a concave surface, and the image side surface is a convex surface. The third lens is disposed as a meniscus lens with positive focal power and whose convex surface faces the image side, so that light can be better converged. This helps reduce the system aberration, and reduce the distortion, thereby improving the image resolution capability of the optical lens assembly. The object side surface of the fourth lens is a convex surface, and the image side surface is a concave surface. The fourth lens is disposed as a meniscus lens with positive focal power and whose convex surface faces the object side, and can quickly converge the light collected in front to the rear optical system.

In a possible implementation, the third lens is an aspheric lens, and the fourth lens is an aspheric lens.

In this implementation of this application, a possible specific implementation of the third lens and the fourth lens is provided. Specifically, the third lens and the fourth lens are aspheric lenses. A feature of the aspheric lens is that a curvature from a center of the lens to a periphery continuously changes. Different from a spherical lens with a constant curvature from a center of the lens to a periphery, the aspheric lens has a better curvature radius feature and a larger degree of freedom, and has advantages of reducing a distortion aberration and reducing an astigmatic aberration. After the aspheric lens is used for the third lens and the fourth lens, light convergence effect is better, and an aberration that occurs during imaging can be eliminated as much as possible, to improve imaging quality of the optical lens assembly.

In a possible implementation, the optical lens assembly further includes:
a light filter.

The light filter is located on an object side of the first lens.

In this implementation of this application, a possible specific implementation of the optical lens assembly is provided. Specifically, the optical lens assembly further includes the light filter, and the light filter is located on the object side of the first lens. The light filter is a colored transparent sheet that has a function of absorbing, reflecting, and transmitting colored light, and can filter out unnecessary noise from light before the light enters the first lens, to correct a color deviation.

With reference to the optical lens assembly according to any one of the first aspect to the third aspect, in a possible implementation, a focal length of the first lens satisfies the following relationship: $1 \leq f 1 / F \leq 3.5$

Herein, f1 is the focal length of the first lens, and F is a focal length of the optical lens assembly.

With reference to the optical lens assembly according to any one of the first aspect to the third aspect, in a possible implementation, a material of the first lens includes a first material, and the first material is used to suppress a temperature drift of the first lens.

With reference to the optical lens assembly according to any one of the first aspect to the third aspect, in a possible implementation, a focal length of the second lens satisfies the following relationship: $- 2.5 \leq f 2 / F \leq - 1.5$

Herein, f2 is the focal length of the second lens, and F is the focal length of the optical lens assembly.

With reference to the optical lens assembly according to any one of the first aspect to the third aspect, in a possible implementation, a focal length of the third lens satisfies the following relationship: $0.9 \leq f 3 / F \leq 1.9$

Herein, f3 is the focal length of the third lens, and F is the focal length of the optical lens assembly.

With reference to the optical lens assembly according to any one of the first aspect to the third aspect, in a possible implementation, the object side surface and the image side surface of the fourth lens satisfy the following relationships: $0.15 \leq R 1 / f 4 \leq 0.6 and 0.15 \leq R 2 / f 4 \leq 0.6$

Herein, R1 is a curvature radius of the object side surface of the fourth lens, R2 is a curvature radius of the image side surface of the fourth lens, and f4 is a focal length of the fourth lens.

With reference to the optical lens assembly according to any one of the first aspect to the third aspect, in a possible implementation, the focal length of the optical lens assembly satisfies the following relationship: $1.5 \leq T / F \leq 2.5$

Herein, T is a distance, on an optical axis, from a center of the object side surface of the first lens to an imaging surface of the optical lens assembly, and F is the focal length of the optical lens assembly.

**According to a fourth aspect**, an embodiment of this application provides an optical imaging apparatus. The optical imaging apparatus includes the optical lens assembly according to any one of the first aspect to the third aspect and any possible implementation.

Optionally, the optical imaging apparatus may further include an imaging sensor.

Optionally, the optical imaging apparatus may be an apparatus like a lidar or an image shooting apparatus.

Optionally, the optical lens assembly may also be applied to another optical imaging apparatus that needs to receive light. This is not limited herein.

**According to a fifth aspect**, an embodiment of this application provides a terminal device. The terminal device includes the optical lens assembly according to any one of the first aspect to the third aspect and any possible implementation, or includes the optical imaging apparatus according to the fourth aspect.

**According to a sixth aspect**, an embodiment of this application provides a vehicle. The vehicle includes the optical lens assembly according to any one of the first aspect to the third aspect and any possible implementation, or includes the optical imaging apparatus according to the fourth aspect, or includes the terminal device according to the fifth aspect.

In embodiments of this application, an optical architecture of four lenses is used. The four lenses are shaped and focal power is appropriately allocated, so that a system aberration introduced by a wide aperture can be reduced, to implement high image resolution performance of an optical lens assembly in the wide aperture.

### BRIEF DESCRIPTION OF DRAWINGS

To describe the technical solutions in embodiments of this application more clearly, the following briefly describes the accompanying drawings for describing embodiments of this application. It is clear that the accompanying drawings in the following descriptions show merely some embodiments of this application, and persons of ordinary skill in the art may derive other drawings from these accompanying drawings without creative efforts.
FIG. 1 is a diagram of a structure of an optical lens assembly according to an embodiment of this application;
FIG. 2 is a diagram of a light path according to an embodiment of this application;
FIG. 3 is a diagram of a structure of an optical lens assembly according to an embodiment of this application;
FIG. 4 is a diagram of a light path according to an embodiment of this application;
FIG. 5 is a diagram of a structure of an optical lens assembly according to an embodiment of this application; and
FIG. 6 is a diagram of a light path according to an embodiment of this application.

### DESCRIPTION OF EMBODIMENTS

To make objectives, technical solutions, and advantages of this application clearer, the following describes embodiments of this application with reference to accompanying drawings in embodiments of this application.

The terms "first", "second", and the like in the specification, claims, and accompanying drawings of this application are used to distinguish between different objects, but are not used to describe a specific sequence. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

An "embodiment" mentioned in this specification means that a particular feature, structure, or characteristic described with reference to the embodiment may be included in at least one embodiment of this application. The phrase shown in various locations in this specification may not necessarily refer to a same embodiment, and is not an independent or optional embodiment exclusive from another embodiment. Persons skilled in the art may explicitly and implicitly understand that, in embodiments of this application, unless otherwise stated or there is a logical conflict, terms and/or descriptions in embodiments are consistent and may be mutually referenced, and technical features in different embodiments may be combined according to an internal logical relationship thereof, to form a new embodiment.

It should be understood that, in this application, "at least one piece (item)" means one or more, "a plurality of" means two or more, "at least two pieces (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may represent a, b, c, "a and b", "a and c", "b and c", or "a, b, and c", where a, b, and c may be singular or plural.

In the accompanying drawings, for ease of description, a thickness, a size, and a shape of a lens are slightly exaggerated. Specifically, a shape of a spherical surface or an aspheric surface shown in the accompanying drawings is shown as an example. In other words, a shape of the spherical surface or the aspheric surface is not limited to the shape of the spherical surface or the aspheric surface shown in the accompanying drawings. The accompanying drawings are merely examples and are not drawn strictly to scale.

As described in the background, a current wide aperture design usually increases design complexity of an optical system and introduces a larger system aberration. This application provides an optical lens assembly and an optical imaging apparatus, and relates to the field of optical imaging technologies, to reduce an aberration introduced by a wide aperture.

The following describes the optical lens assembly and the optical imaging apparatus provided in this application with reference to the accompanying drawings.

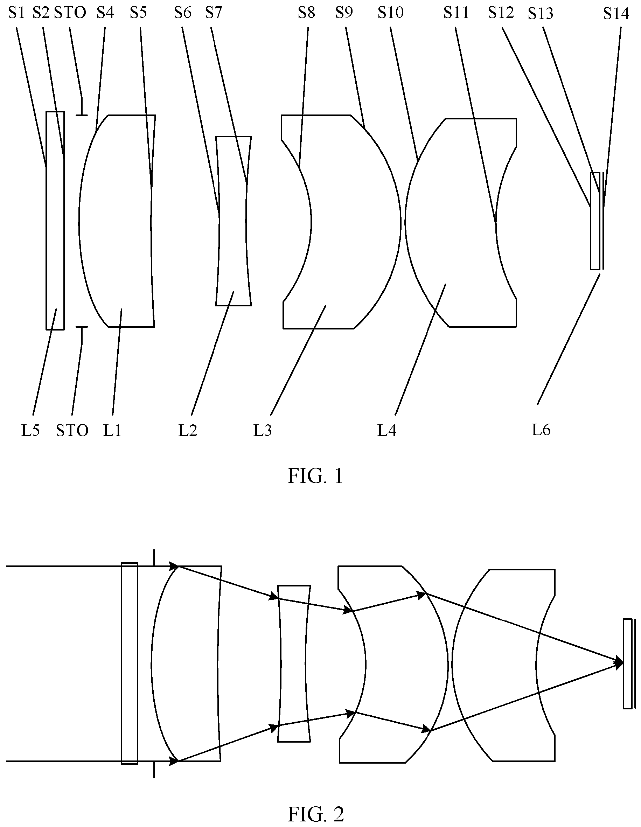

Refer to FIG. 1. FIG. 1 is a diagram of a structure of an optical lens assembly according to an embodiment of this application.

As shown in FIG. 1, the optical lens assembly includes:
a first lens L1, a second lens L2, a third lens L3, and a fourth lens L4 that are sequentially coaxially disposed from an object side to an image side.

The first lens L1, the third lens L3, and the fourth lens L4 have positive focal power, and the second lens L2 has negative focal power.

The first lens L1 is a meniscus lens, the second lens L2 is a double-concave lens, the third lens L3 is a meniscus lens, and the fourth lens L4 is a meniscus lens.

It may be understood that the first lens L1 in the optical lens assembly is a meniscus lens with positive focal power, and can collect light in a field of view as much as possible, so that more light enters a rear optical system, and a lens diameter of the second lens L2 can be reduced.

The second lens L2 in the optical lens assembly is a double-concave lens with negative focal power. This helps smoothly transfer the light collected by the first lens L1 to the third lens L3, and helps increase a depth of field (depth of field, DOF) of the optical lens assembly.

The third lens L3 in the optical lens assembly is a meniscus lens with positive focal power, so that light can be better converged. This helps reduce a system aberration, and reduce distortion, thereby improving an image resolution capability of the optical lens assembly.

The fourth lens L4 in the optical lens assembly is a meniscus lens with positive focal power, and can quickly converge the light collected in front to the rear optical system.

In this embodiment of this application, an optical architecture of four lenses (L1, L2, L3, and L4) is used. The four lenses are shaped and focal power is appropriately allocated, so that a system aberration introduced by a wide aperture can be reduced, to implement high image resolution performance of an optical lens assembly in the wide aperture.

**In a possible embodiment,** an object side surface S4 of the first lens L1 is a convex surface, and an image side surface S5 of the first lens L1 is a concave surface.

According to this embodiment of this application, the first lens L1 is disposed as a meniscus lens with positive focal power and whose convex surface faces the object side, and can collect light in the field of view as much as possible, so that more light enters the rear optical system, and the lens diameter of the second lens L2 can be reduced.

Optionally, a material of the first lens L1 includes a first material, and the first material is used to suppress a temperature drift of the first lens L1.

For example, the first material may include but is not limited to at least one of the following: glass whose model is H-ZPK1A and glass whose model is H-FK61.

According to this embodiment of this application, a temperature drift resistance capability of the first lens L1 can be improved.

**In a possible embodiment,** an object side surface S6 of the second lens L2 is a concave surface, and an image side surface S7 of the second lens L2 is a concave surface.

According to this embodiment of this application, the second lens L2 is disposed as a double-concave lens with negative focal power, so that light collected by the first lens L1 can be smoothly transferred to the third lens L3. In addition, this helps increase the DOF of the optical lens assembly, improve an assembly yield of each lens, and ensure sensitivity of the lens.

**In a possible embodiment,** an object side surface S8 of the third lens L3 is a concave surface, and an image side surface S9 of the third lens L3 is a convex surface.

According to this embodiment of this application, the third lens L3 is disposed as a meniscus lens with positive focal power and whose convex surface faces the image side, so that light can be better converged. This helps reduce the system aberration, and reduce the distortion, thereby improving the image resolution capability of the optical lens assembly.

**In a possible embodiment,** an object side surface S10 of the fourth lens L4 is a convex surface, and an image side surface S11 of the fourth lens L4 is a concave surface.

According to this embodiment of this application, the fourth lens L4 is disposed as a meniscus lens with positive focal power and whose convex surface faces the object side, and can quickly converge the light collected in front to the rear optical system (for example, an imaging sensor L6).

It should be understood that, in this embodiment of this application, a surface that is on each lens and that is closest to an object is referred to as an object side surface, and a surface that is on each lens and that is closest to an imaging surface is referred to as an image side surface. Details are not described again below.

**In a possible embodiment,** the third lens L3 is an aspheric lens.

It may be understood that a feature of the aspheric lens is that a curvature from a center of the lens to a periphery continuously changes. Different from a spherical lens with a constant curvature from a center of the lens to a periphery, the aspheric lens has a better curvature radius feature and a larger degree of freedom, and has advantages of reducing a distortion aberration and reducing an astigmatic aberration.

Therefore, in this embodiment of this application, after the aspheric lens is used for the third lens L3, light convergence effect is better, and an aberration that occurs during imaging can be eliminated as much as possible, to improve imaging quality of the optical lens assembly.

**In a possible embodiment**, the optical lens assembly may further include:
a light filter L5.

The light filter L5 is located on an object side of the first lens L1.

It may be understood that the light filter L5 is a colored transparent sheet that has a function of absorbing, reflecting, and transmitting colored light, and can filter out unnecessary noise from light before the light enters the first lens L1, to correct a color deviation.

**Optionally**, the optical lens assembly may further include:
a stop STO.

The stop STO is disposed between the light filter L5 and the first lens L1.

It may be understood that intensity of passing light may be adjusted by using the stop STO, to improve imaging quality. In addition, the stop STO is placed in front of each lens, so that a size of the entire lens assembly can be reduced, to implement miniaturization of the optical lens assembly.

Optionally, a focal length of the first lens L1 satisfies the following relationship: $1 \leq f 1 / F \leq 3.5$

Herein, f1 is the focal length of the first lens L1, and F is a focal length of the optical lens assembly.

It may be understood that the first lens L1 has the long focal length f1, and can collect more light for better convergence.

Optionally, a focal length of the second lens L2 satisfies the following relationship: $- 2.5 \leq f 2 / F \leq - 1.5$

Herein, f2 is the focal length of the second lens L2, and F is the focal length of the optical lens assembly.

It may be understood that the second lens L2 that satisfies the focal length f2 can smoothly transfer the light collected by the first lens L1 to the third lens L3.

Optionally, a focal length of the third lens L3 satisfies the following relationship: $0.9 \leq f 3 / F \leq 1.9$

Herein, f3 is the focal length of the third lens L3, and F is the focal length of the optical lens assembly.

It may be understood that the third lens L3 that satisfies the focal length f3 can better converge light. This helps reduce the system aberration, and reduce the distortion, thereby improving the image resolution capability of the optical lens assembly.

Optionally, the object side surface S10 and the image side surface S11 of the fourth lens L4 satisfy the following relationship: $0.15 \leq R 1 / f 4 \leq 0.6 and 0.15 \leq R 2 / f 4 \leq 0.6$

Herein, R1 is a curvature radius of the object side surface S10 of the fourth lens L4, R2 is a curvature radius of the image side surface S11 of the fourth lens L4, and f4 is a focal length of the fourth lens L4.

It may be understood that the fourth lens L4 that satisfies the focal length f4 and the curvature radii R1 and R2 can quickly converge the light collected in front to the rear optical system.

Optionally, the focal length of the optical lens assembly satisfies the following relationship: $1.5 \leq T / F \leq 2.5$

Herein, T is a distance, on an optical axis, from a center of the object side surface S4 of the first lens L1 to an imaging surface S12 of the optical lens assembly, and F is the focal length of the optical lens assembly.

It may be understood that the optical lens assembly that satisfies the focal length F can reduce the size of the entire lens assembly, to implement miniaturization of the optical lens assembly.

In conclusion, a path for light from an object to arrive at an imaging surface S14 of the imaging sensor L6 can be learned from the optical lens assembly described in embodiments related to FIG. 1.

For details, refer to FIG. 2. FIG. 2 is a diagram of a light path according to an embodiment of this application.

As shown in FIG. 2, the light from the object sequentially passes through an object side surface S1 and an image side surface S2 of the light filter L5, the stop STO, the object side surface S4 and the image side surface S5 of the first lens L1, the object side surface S6 and the image side surface S7 of the second lens L2, the object side surface S8 and the image side surface S9 of the third lens L3, the object side surface S10 and the image side surface S11 of the fourth lens L4, and a front surface S12 and a rear surface S13 of protective glass of the imaging sensor L6, and is finally imaged on the imaging surface S14 of the imaging sensor L6.

It may be understood that the path shown in FIG. 2 for the light to pass through the optical lens assembly shown in FIG. 1 to arrive at the imaging surface is merely shown as an example, and is not drawn strictly based on a proportion. Therefore, embodiments of this application should not be limited thereto.

Optionally, parameter information (a curvature radius, a thickness/spacing, a refractive index, and a scattering coefficient) of each component of the optical lens assembly shown in FIG. 1 may be shown in Table 1.

**Table 1**

| Sequence number (S) | Curvature radius (mm) | Thickness/Spacing (mm) | Refractive index nd | Scattering coefficient (Abbe number vd) |
|---|---|---|---|---|
| 1 | Infinite | 1.10 | 1.52 | 64.21 |
| 2 | Infinite | 1.45 | | |
| STO | Infinite | -0.50 | | |
| 4 | 12.73 | 4.46 | 1.62 | 63.41 |
| 5 | 141.07 | 4.09 | | |
| 6 | -50.35 | 1.58 | 1.81 | 41.02 |
| 7 | 40.10 | 3.89 | | |
| 8 | -8.80 | 5.51 | 1.81 | 40.92 |
| 9 | -8.19 | 0.25 | | |
| 10 | 9.18 | 5.51 | 1.90 | 31.31 |
| 11 | 9.55 | 5.65 | | |
| 12 | Infinite | 0.50 | 1.46 | 67.82 |
| 13 | Infinite | 0.1 | | |
| 14 | Infinite | | | |

The sequence number 1 indicates the object side surface of the light filter L5, and the sequence number 2 indicates the image side surface of the light filter L5. The sequence number STO indicates the stop. The sequence number 4 indicates the object side surface of the first lens L1, and the sequence number 5 indicates the image side surface of the first lens L1. The sequence number 6 indicates the object side surface of the second lens L2, and the sequence number 7 indicates the image side surface of the second lens L2. The sequence number 8 indicates the object side surface of the third lens L3, and the sequence number 9 indicates the image side surface of the third lens L3. The sequence number 10 indicates the object side surface of the fourth lens L4, and the sequence number 11 indicates the image side surface of the fourth lens L4. The sequence number 12 indicates the front surface of the protective glass of the imaging sensor L6, the sequence number 13 indicates the rear surface of the protective glass of the imaging sensor L6, and the sequence number 14 indicates the imaging surface of the imaging sensor L6.

A surface shape (z) of the third lens L3 may satisfy the following formula: $z = \frac{{cr}^{2}}{1 + \sqrt{1 - \left(1+k\right) {c}^{2} {r}^{2}}} + {a}_{4} {r}^{4} + {a}_{6} {r}^{6} + {a}_{8} {r}^{8} + {a}_{10} {r}^{10}$

Herein, z is a distance sagitta from an aspheric surface to a vertex of the aspheric surface at a position with a height of r in an optical axis direction, c is a paraxial curvature of the aspheric surface, c=1/R, R is the curvature radius, k is a conic (conic) coefficient, and a₄, a₆, a₈, a₁₀, and the like are high-order term coefficients and may be set based on coefficients shown in Table 2.

**Table 2**

| Sequence number (S) | k | a₄ | a₆ | a₈ | a₁₀ |
|---|---|---|---|---|---|
| 8 | 5.99E-01 | -2.373849E-05 | -4.280217E-06 | -7.110460E-08 | -1.422097E-09 |
| 9 | -4.76E-01 | -5.056678E-05 | -1.610098E-06 | 9.568527E-08 | -2.144324E-10 |

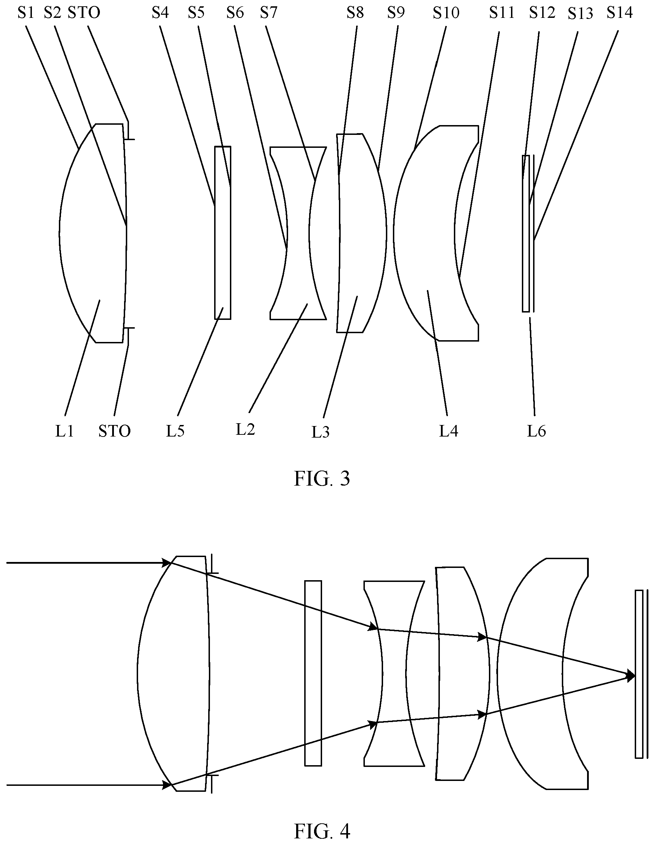

Refer to FIG. 3. FIG. 3 is a diagram of a structure of an optical lens assembly according to an embodiment of this application.

As shown in FIG. 3, the optical lens assembly includes:
a first lens L1, a second lens L2, a third lens L3, and a fourth lens L4 that are sequentially coaxially disposed from an object side to an image side.

The first lens L1, the third lens L3, and the fourth lens L4 have positive focal power, and the second lens L2 has negative focal power.

The first lens L1 is a double-convex lens, the second lens L2 is a double-concave lens, the third lens L3 is a meniscus lens, and the fourth lens L4 is a meniscus lens.

It may be understood that the first lens L1 in the optical lens assembly is a double-convex lens with positive focal power, and can collect light in a field of view as much as possible, so that more light enters a rear optical system, and a lens diameter of the second lens L2 can be reduced.

The second lens L2 in the optical lens assembly is a double-concave lens with negative focal power. This helps smoothly transfer the light collected by the first lens L1 to the third lens L3, and helps increase a DOF of the optical lens assembly.

The third lens L3 in the optical lens assembly is a meniscus lens with positive focal power, so that light can be better converged. This helps reduce a system aberration, and reduce distortion, thereby improving an image resolution capability of the optical lens assembly.

The fourth lens L4 in the optical lens assembly is a meniscus lens with positive focal power, and can quickly converge the light collected in front to the rear optical system.

In this embodiment of this application, an optical architecture of four lenses (L1, L2, L3, and L4) is used. The four lenses are shaped and focal power is appropriately allocated, so that a system aberration introduced by a wide aperture can be reduced, to implement high image resolution performance of the optical lens assembly in the wide aperture.

**In a possible embodiment,** an object side surface S1 of the first lens L1 is a convex surface, and an image side surface S2 of the first lens L1 is a convex surface.

According to this embodiment of this application, the first lens L1 is disposed as a double-convex lens with positive focal power, and can collect light in the field of view as much as possible, so that more light enters the rear optical system, and the lens diameter of the second lens L2 can be reduced.

Optionally, a material of the first lens L1 includes a first material, and the first material is used to suppress a temperature drift of the first lens L1.

For example, the first material may include but is not limited to at least one of the following: glass whose model is H-ZPK1A and glass whose model is H-FK61.

According to this embodiment of this application, a temperature drift resistance capability of the first lens L1 can be improved.

**In a possible embodiment,** an object side surface S6 of the second lens L2 is a concave surface, and an image side surface S7 of the second lens L2 is a concave surface.

According to this embodiment of this application, the second lens L2 is disposed as a double-concave lens with negative focal power, so that light collected by the first lens L1 can be smoothly transferred to the third lens L3. In addition, this helps increase the DOF of the optical lens assembly, improve an assembly yield of each lens, and ensure sensitivity of the lens.

**In a possible embodiment,** an object side surface S8 of the third lens L3 is a concave surface, and an image side surface S9 of the third lens L3 is a convex surface.

According to this embodiment of this application, the third lens L3 is disposed as a meniscus lens with positive focal power and whose convex surface faces the image side, so that light can be better converged. This helps reduce the system aberration, and reduce the distortion, thereby improving the image resolution capability of the optical lens assembly.

**In a possible embodiment,** an object side surface S10 of the fourth lens L4 is a convex surface, and an image side surface S11 of the fourth lens L4 is a concave surface.

According to this embodiment of this application, the fourth lens L4 is disposed as a meniscus lens with positive focal power and whose convex surface faces the object side, and can quickly converge the light collected in front to the rear optical system (for example, an imaging sensor L6).

It should be understood that, in this embodiment of this application, a surface that is on each lens and that is closest to an object is referred to as an object side surface, and a surface that is on each lens and that is closest to an imaging surface is referred to as an image side surface. Details are not described again below.

**In a possible embodiment,** the first lens L1 is an aspheric lens, and the third lens L3 is an aspheric lens.

It may be understood that a feature of the aspheric lens is that a curvature from a center of the lens to a periphery continuously changes. Different from a spherical lens with a constant curvature from a center of the lens to a periphery, the aspheric lens has a better curvature radius feature and a larger degree of freedom, and has advantages of reducing a distortion aberration and reducing an astigmatic aberration.

Therefore, in this embodiment of this application, after the aspheric lens is used for the first lens L1 and the third lens L3, light convergence effect is better, and an aberration that occurs during imaging can be eliminated as much as possible, to improve imaging quality of the optical lens assembly.

**In a possible embodiment**, the optical lens assembly may further include:
a light filter L5.

The light filter L5 is located on an image side of the first lens L1 and an object side of the second lens L2.

It may be understood that the light filter L5 is a colored transparent sheet that has a function of absorbing, reflecting, and transmitting colored light, and can filter out unnecessary noise from light before the light enters the second lens L2, to correct a color deviation. In addition, the light filter L5 is disposed inside the optical lens assembly and between the lenses, so that a clear aperture can be reduced, helping optimize assembly costs of the lenses.

**Optionally**, the optical lens assembly may further include:
a stop STO.

The stop STO is disposed between the first lens L1 and the light filter L5.

It may be understood that intensity of passing light may be adjusted by using the stop STO, to improve imaging quality.

Optionally, a focal length of the first lens L1 satisfies the following relationship: $1 \leq f 1 / F \leq 3.5$

Herein, f1 is the focal length of the first lens L1, and F is a focal length of the optical lens assembly.

It may be understood that the first lens L1 has the long focal length f1, and can collect more light for better convergence.

Optionally, a focal length of the second lens L2 satisfies the following relationship: $- 2.5 \leq f 2 / F \leq - 1.5$

Herein, f2 is the focal length of the second lens L2, and F is the focal length of the optical lens assembly.

It may be understood that the second lens L2 that satisfies the focal length f2 can smoothly transfer the light collected by the first lens L1 to the third lens L3.

Optionally, a focal length of the third lens L3 satisfies the following relationship: $0.9 \leq f 3 / F \leq 1.9$

Herein, f3 is the focal length of the third lens L3, and F is the focal length of the optical lens assembly.

It may be understood that the third lens L3 that satisfies the focal length f3 can better converge light. This helps reduce the system aberration, and reduce the distortion, thereby improving the image resolution capability of the optical lens assembly.

Optionally, the object side surface S10 and the image side surface S11 of the fourth lens L4 satisfy the following relationship: $0.15 \leq R 1 / f 4 \leq 0.6 and 0.15 \leq R 2 / f 4 \leq 0.6$

Herein, R1 is a curvature radius of the object side surface S10 of the fourth lens L4, R2 is a curvature radius of the image side surface S11 of the fourth lens L4, and f4 is a focal length of the fourth lens L4.

It may be understood that the fourth lens L4 that satisfies the focal length f4 and the curvature radii R1 and R2 can quickly converge the light collected in front to the rear optical system.

Optionally, the focal length of the optical lens assembly satisfies the following relationship: $1.5 \leq T / F \leq 2.5$

Herein, T is a distance, on an optical axis, from a center of the object side surface S4 of the first lens L1 to an imaging surface S12 of the optical lens assembly, and F is the focal length of the optical lens assembly.

It may be understood that the optical lens assembly that satisfies the focal length F can reduce the size of the entire lens assembly, to implement miniaturization of the optical lens assembly.

In conclusion, a path for light from an object to arrive at an imaging surface S14 of the imaging sensor L6 can be learned from the optical lens assembly described in embodiments related to FIG. 3.

For details, refer to FIG. 4. FIG. 4 is a diagram of a light path according to an embodiment of this application.

As shown in FIG. 4, the light from the object sequentially passes through the object side surface S1 and the image side surface S2 of the first lens L1, the stop STO, an object side surface S4 and an image side surface S5 of the light filter L5, the object side surface S6 and the image side surface S7 of the second lens L2, the object side surface S8 and the image side surface S9 of the third lens L3, the object side surface S10 and the image side surface S11 of the fourth lens L4, and a front surface S12 and a rear surface S13 of protective glass of the imaging sensor L6, and is finally imaged on the imaging surface S14 of the imaging sensor L6.

It may be understood that the path shown in FIG. 4 for the light to pass through the optical lens assembly shown in FIG. 3 to arrive at the imaging surface is merely shown as an example, and is not drawn strictly based on a proportion. Therefore, embodiments of this application should not be limited thereto.

Optionally, parameter information (a curvature radius, a thickness/spacing, a refractive index, and a scattering coefficient) of each component of the optical lens assembly shown in FIG. 3 may be shown in Table 3.

**Table 3**

| Sequence number (S) | Curvature radius (mm) | Thickness/Spacing (mm) | Refractive index nd | Scattering coefficient (Abbe number vd) |
|---|---|---|---|---|
| 1 | 13.26 | 4.83 | 1.49 | 72.33 |
| 2 | -97.94 | 0.20 | | |
| STO | Infinite | 6.28 | | |
| 4 | Infinite | 1.10 | 1.52 | 64.21 |
| 5 | Infinite | 4.16 | | |
| 6 | -14.18 | 1.6 | 1.59 | 61.25 |
| 7 | 15.80 | 2.22 | | |
| 8 | -68.09 | 3.43 | 1.81 | 40.92 |
| 9 | -14.43 | 0.43 | | |
| 10 | 10.77 | 4.50 | 2.00 | 25.44 |
| 11 | 13.88 | 4.95 | | |
| 12 | Infinite | 0.50 | 1.46 | 67.82 |
| 13 | Infinite | 0.435 | | |
| 14 | Infinite | | | |

The sequence number 1 indicates the object side surface of the first lens L1, and the sequence number 2 indicates the image side surface of the first lens L1. The sequence number STO indicates the stop. The sequence number 4 indicates the object side surface of the light filter L5, and the sequence number 5 indicates the image side surface of the light filter L5. The sequence number 6 indicates the object side surface of the second lens L2, and the sequence number 7 indicates the image side surface of the second lens L2. The sequence number 8 indicates the object side surface of the third lens L3, and the sequence number 9 indicates the image side surface of the third lens L3. The sequence number 10 indicates the object side surface of the fourth lens L4, and the sequence number 11 indicates the image side surface of the fourth lens L4. The sequence number 12 indicates the front surface of the protective glass of the imaging sensor L6, the sequence number 13 indicates the rear surface of the protective glass of the imaging sensor L6, and the sequence number 14 indicates the imaging surface of the imaging sensor L6.

Surface shapes (z) of the first lens L1 and the third lens L3 may satisfy the following formula: $z = \frac{{cr}^{2}}{1 + \sqrt{1 - \left(1+k\right) {c}^{2} {r}^{2}}} + {a}_{4} {r}^{4} + {a}_{6} {r}^{6} + {a}_{8} {r}^{8}$

Herein, z is a distance sagitta from an aspheric surface to a vertex of the aspheric surface at a position with a height of r in an optical axis direction, c is a paraxial curvature of the aspheric surface, c=1/R, R is the curvature radius, k is a conic (conic) coefficient, and a₄, a₆, a₈, and the like are high-order term coefficients and may be set based on coefficients shown in Table 4.

**Table 4**

| Sequence number (S) | k | a₄ | a₆ | a₈ |
|---|---|---|---|---|
| 1 | -2.51E+00 | 1.224662E-05 | -9.758264E-08 | 0.000000E+00 |
| 2 | 9.30E+01 | 4.387810E-05 | 0.000000E+00 | 0.000000E+00 |
| 8 | 9.35E+01 | 6.675373E-05 | 4.7.7450E-07 | -6.439149E-08 |
| 9 | 2.16E+00 | 1.139956E-05 | 4.364800E-07 | -2.691282E-08 |

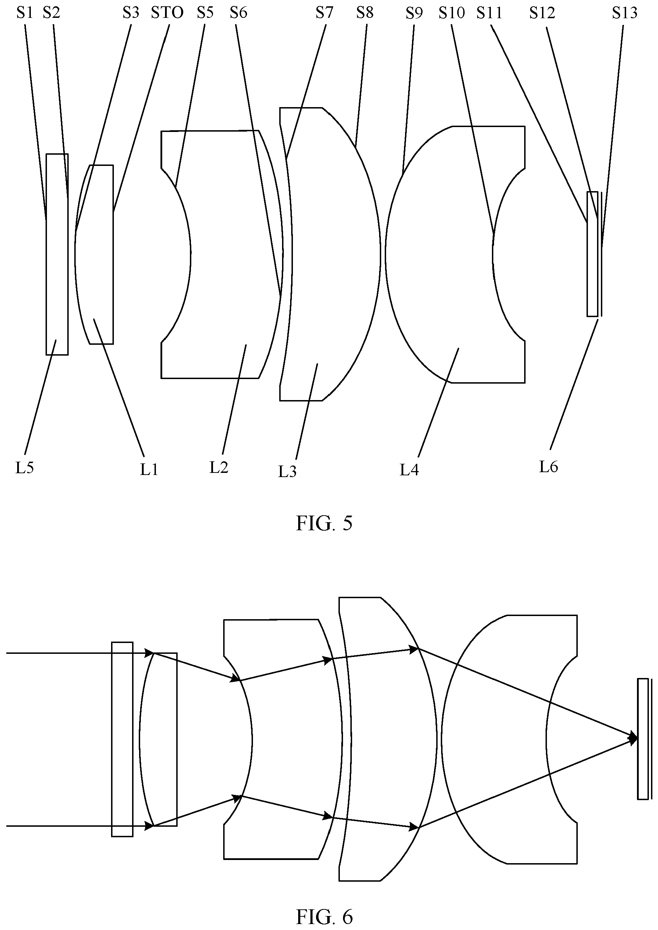

Refer to FIG. 5. FIG. 5 is a diagram of a structure of an optical lens assembly according to an embodiment of this application.

As shown in FIG. 5, the optical lens assembly includes:
a first lens L1, a second lens L2, a third lens L3, and a fourth lens L4 that are sequentially coaxially disposed from an object side to an image side.

The first lens L1, the third lens L3, and the fourth lens L4 have positive focal power, and the second lens L2 has negative focal power.

The first lens L1 is a planoconvex lens, the second lens L2 is a meniscus lens, the third lens L3 is a meniscus lens, and the fourth lens L4 is a meniscus lens.

It may be understood that the first lens L1 in the optical lens assembly is a planoconvex lens with positive focal power, and can collect light in a field of view as much as possible, so that more light enters a rear optical system, and a lens diameter of the second lens L2 can be reduced.

The second lens L2 in the optical lens assembly is a meniscus lens with negative focal power. This helps smoothly transfer the light collected by the first lens L1 to the third lens L3, and helps increase a depth of field DOF of the optical lens assembly.

The third lens L3 in the optical lens assembly is a meniscus lens with positive focal power, so that light can be better converged. This helps reduce a system aberration, and reduce distortion, thereby improving an image resolution capability of the optical lens assembly.

The fourth lens L4 in the optical lens assembly is a meniscus lens with positive focal power, and can quickly converge the light collected in front to the rear optical system.

In this embodiment of this application, an optical architecture of four lenses (L1, L2, L3, and L4) is used. The four lenses are shaped and focal power is appropriately allocated, so that a system aberration introduced by a wide aperture can be reduced, to implement high image resolution performance of the optical lens assembly in the wide aperture.

**In a possible embodiment,** an object side surface S3 of the first lens L1 is a convex surface, and an image side surface STO of the first lens L1 is a plane.

According to this embodiment of this application, the first lens L1 is disposed as a planoconvex lens with positive focal power and whose convex surface faces the object side, and can collect light in the field of view as much as possible, so that more light enters the rear optical system, and the lens diameter of the second lens L2 can be reduced.

Optionally, a material of the first lens L1 includes a first material, and the first material is used to suppress a temperature drift of the first lens L1.

For example, the first material may include but is not limited to at least one of the following: glass whose model is H-ZPK1A and glass whose model is H-FK61.

According to this embodiment of this application, a temperature drift resistance capability of the first lens L1 can be improved.

**In a possible embodiment,** an object side surface S5 of the second lens L2 is a concave surface, and an image side surface S6 of the second lens L2 is a convex surface.

According to this embodiment of this application, the second lens L2 is disposed as a lens with negative focal power and whose convex surface faces the image side, so that light collected by the first lens L1 can be smoothly transferred to the third lens L3. In addition, this helps increase the DOF of the optical lens assembly, improve an assembly yield of each lens, and ensure sensitivity of the lens.

**In a possible embodiment,** an object side surface S7 of the third lens L3 is a concave surface, and an image side surface S8 of the third lens L3 is a convex surface.

According to this embodiment of this application, the third lens L3 is disposed as a meniscus lens with positive focal power and whose convex surface faces the image side, so that light can be better converged. This helps reduce the system aberration, and reduce the distortion, thereby improving the image resolution capability of the optical lens assembly.

**In a possible embodiment,** an object side surface S9 of the fourth lens L4 is a convex surface, and an image side surface S10 of the fourth lens L4 is a concave surface.

According to this embodiment of this application, the fourth lens L4 is disposed as a meniscus lens with positive focal power and whose convex surface faces the object side, and can quickly converge the light collected in front to the rear optical system (for example, an imaging sensor L6).

It should be understood that, in this embodiment of this application, a surface that is on each lens and that is closest to an object is referred to as an object side surface, and a surface that is on each lens and that is closest to an imaging surface is referred to as an image side surface. Details are not described again below.

**In a possible embodiment,** the third lens L3 is an aspheric lens, and the fourth lens L4 is an aspheric lens.

It may be understood that a feature of the aspheric lens is that a curvature from a center of the lens to a periphery continuously changes. Different from a spherical lens with a constant curvature from a center of the lens to a periphery, the aspheric lens has a better curvature radius feature and a larger degree of freedom, and has advantages of reducing a distortion aberration and reducing an astigmatic aberration.

Therefore, in this embodiment of this application, after the aspheric lens is used for the third lens L3 and the fourth lens L4, light convergence effect is better, and an aberration that occurs during imaging can be eliminated as much as possible, to improve imaging quality of the optical lens assembly.

**In a possible embodiment**, the optical lens assembly may further include:
a light filter L5.

The light filter L5 is located on an object side of the first lens L1.

It may be understood that the light filter L5 is a colored transparent sheet that has a function of absorbing, reflecting, and transmitting colored light, and can filter out unnecessary noise from light before the light enters the first lens L1, to correct a color deviation.

**Optionally**, the optical lens assembly may further include:
a stop STO.

The stop STO is disposed on the image side surface of the first lens L1. In other words, the image side surface of the first lens L1 and the stop STO are coplanar.

It may be understood that intensity of passing light may be adjusted by using the stop STO, to improve imaging quality.

Optionally, a focal length of the first lens L1 satisfies the following relationship: $1 \leq f 1 / F \leq 3.5$

Herein, f1 is the focal length of the first lens L1, and F is a focal length of the optical lens assembly.

It may be understood that the first lens L1 has the long focal length f1, and can collect more light for better convergence.

Optionally, a focal length of the second lens L2 satisfies the following relationship: $- 2.5 \leq f 2 / F \leq - 1.5$

Herein, f2 is the focal length of the second lens L2, and F is the focal length of the optical lens assembly.

It may be understood that the second lens L2 that satisfies the focal length f2 can smoothly transfer the light collected by the first lens L1 to the third lens L3.

Optionally, a focal length of the third lens L3 satisfies the following relationship: $0.9 \leq f 3 / F \leq 1.9$

Herein, f3 is the focal length of the third lens L3, and F is the focal length of the optical lens assembly.

It may be understood that the third lens L3 that satisfies the focal length f3 can better converge light. This helps reduce the system aberration, and reduce the distortion, thereby improving the image resolution capability of the optical lens assembly.

Optionally, the object side surface S10 and the image side surface S11 of the fourth lens L4 satisfy the following relationship: $0.15 \leq R 1 / f 4 \leq 0.6 and 0.15 \leq R 2 / f 4 \leq 0.6$

Herein, R1 is a curvature radius of the object side surface S9 of the fourth lens L4, R2 is a curvature radius of the image side surface S10 of the fourth lens L4, and f4 is a focal length of the fourth lens L4.

It may be understood that the fourth lens L4 that satisfies the focal length f4 and the curvature radii R1 and R2 can quickly converge the light collected in front to the rear optical system.

Optionally, the focal length of the optical lens assembly satisfies the following relationship: $1.5 \leq T / F \leq 2.5$

Herein, T is a distance, on an optical axis, from a center of the object side surface S1 of the first lens L1 to an imaging surface S12 of the optical lens assembly, and F is the focal length of the optical lens assembly.

It may be understood that the optical lens assembly that satisfies the focal length F can reduce the size of the entire lens assembly, to implement miniaturization of the optical lens assembly.

In conclusion, a path for light from an object to arrive at an imaging surface S14 of the imaging sensor L6 can be learned from the optical lens assembly described in embodiments related to FIG. 5.

For details, refer to FIG. 6. FIG. 6 is a diagram of a light path according to an embodiment of this application.

As shown in FIG. 6, the light from the object sequentially passes through an object side surface S1 and an image side surface S2 of the light filter L5, the object side surface S3 and the image side surface STO of the first lens L1, the object side surface S5 and the image side surface S6 of the second lens L2, the object side surface S7 and the image side surface S8 of the third lens L3, the object side surface S9 and the image side surface S10 of the fourth lens L4, and a front surface S11 and a rear surface S12 of protective glass of the imaging sensor L6, and is finally imaged on the imaging surface S11 of the imaging sensor L6.

It may be understood that the path shown in FIG. 6 for the light to pass through the optical lens assembly shown in FIG. 5 to arrive at the imaging surface is merely shown as an example, and is not drawn strictly based on a proportion. Therefore, embodiments of this application should not be limited thereto.

Optionally, parameter information (a curvature radius, a thickness/spacing, a refractive index, and a scattering coefficient) of each component of the optical lens assembly shown in FIG. 5 may be shown in Table 5.

**Table 5**

| Sequence number (S) | Curvature radius (mm) | Thickness/Spacing (mm) | Refractive index nd | Scattering coefficient (Abbe number vd) |
|---|---|---|---|---|
| 1 | Infinite | 1.10 | 1.52 | 64.21 |
| 2 | Infinite | 0.40 | | |
| 3 | 14.74 | 1.94 | 1.50 | 81.59 |
| STO | Infinite | 3.97 | | |
| 5 | -7.67 | 4.73 | 1.83 | 37.23 |
| 6 | -17.11 | 0.43 | | |
| 7 | -46.07 | 4.56 | 1.81 | 40.97 |
| 8 | -10.30 | 0.19 | | |
| 9 | 7.67 | 5.55 | 1.81 | 40.97 |
| 10 | 6.89 | 4.81 | | |
| 11 | Infinite | 0.50 | 1.46 | 67.82 |
| 12 | Infinite | 0.10 | | |
| 13 | Infinite | | | |

The sequence number 1 indicates the object side surface of the light filter L5, and the sequence number 2 indicates the image side surface of the light filter L5. The sequence number 3 indicates the object side surface of the first lens L1, and the sequence number STO indicates the image side surface of the first lens L1. Optionally, the sequence number STO also indicates the stop. The sequence number 5 indicates the object side surface of the second lens L2, and the sequence number 6 indicates the image side surface of the second lens L2. The sequence number 7 indicates the object side surface of the third lens L3, and the sequence number 8 indicates the image side surface of the third lens L3. The sequence number 9 indicates the object side surface of the fourth lens L4, and the sequence number 10 indicates the image side surface of the fourth lens L4. The sequence number 11 indicates the front surface of the protective glass of the imaging sensor L6, the sequence number 12 indicates the rear surface of the protective glass of the imaging sensor L6, and the sequence number 13 indicates the imaging surface of the imaging sensor L6.

Surface shapes (z) of the third lens L3 and the fourth lens L4 may satisfy the following formula: $z = \frac{{cr}^{2}}{1 + \sqrt{1 - \left(1+k\right) {c}^{2} {r}^{2}}} + {a}_{4} {r}^{4} + {a}_{6} {r}^{6} + {a}_{8} {r}^{8} + {a}_{10} {r}^{10} + {a}_{12} {r}^{12}$

Herein, z is a distance sagitta from an aspheric surface to a vertex of the aspheric surface at a position with a height of r in an optical axis direction, c is a paraxial curvature of the aspheric surface, c=1/R, R is the curvature radius, k is a conic (conic) coefficient, and a₄, a₆, a₈, a₁₀, a₁₂ , and the like are high-order term coefficients and may be set based on coefficients shown in Table 6.

**Table 6**

| Sequence number (S) | k | a₄ | a₆ | a₈ | a₁₀ | a₁₂ |
|---|---|---|---|---|---|---|
| 7 | 1.07E+01 | 1.310706E-04 | -5.124880E-06 | 1.270744E-07 | -6.206163E-10 | -2.562050E-11 |
| 8 | -5.12E-01 | -9.658795E-06 | 1.523057E-06 | 9.796018E-08 | -3.495932E-10 | -5.862383E-12 |
| 9 | -7.27E-01 | 3.308234E-05 | 3.041149E-06 | 5.606788E-08 | 1.587646E-09 | -4.462334E-11 |
| 10 | 7.89E-01 | -4.231796E-04 | -2.837943E-06 | 1.377713E-07 | 8.383896E-08 | -6.050090E-09 |

Optionally, with reference to the comparison between the optical lens assemblies shown in FIG. 1 to FIG. 5, the following Table 7 may be obtained.

**Table 7**

| | Component | Focal power | Lens shape | Lens surface type | Object side surface | Image side surface | Focal length (fn) |
|---|---|---|---|---|---|---|---|
| Optical lens assembly shown in FIG. 1 | L5 | / | | | | | |
| | L1 | Positive | Meniscus lens | Spherical lens | Convex surface | Concave surface | 1≤f1/F≤3.5 |
| | L2 | Negative | Double-concave lens | Spherical lens | Concave surface | Concave surface | -2.5≤f2/F≤-1.5 |
| | L3 | Positive | Meniscus lens | Aspheric lens | Concave surface | Convex surface | 0.9≤f3/F≤1.9 |
| | L4 | Positive | Meniscus lens | Spherical lens | Convex surface | Concave surface | 0.15≤R1/f4≤0.6 and 0.15≤R2/f4≤0.6 |
| | L6 | / | | | | | |
| Optical lens assembly shown in FIG. 3 | L1 | Positive | Double-convex lens | Aspheric lens | Convex surface | Convex surface | 1≤f1/F≤3.5 |
| | L5 | / | | | | | |
| | L2 | Negative | Double-concave lens | Spherical lens | Concave surface | Concave surface | -2.5≤f2/F≤-1.5 |
| | L3 | Positive | Meniscus lens | Aspheric lens | Concave surface | Convex surface | 0.9≤f3/F≤1.9 |
| | L4 | Positive | Meniscus lens | Spherical lens | Convex surface | Concave surface | 0.15≤R1/f4≤0.6 and 0.15≤R2/f4≤0.6 |
| | L6 | / | | | | | |
| Optical lens assembly shown in FIG. 5 | L5 | / | | | | | |
| | L1 | Positive | Planoconvex lens | Spherical lens | Convex surface | Plane | 1≤f1/F≤3.5 |
| | L2 | Negative | Meniscus lens | Spherical lens | Concave surface | Convex surface | -2.5≤f2/F≤-1.5 |
| | L3 | Positive | Meniscus lens | Aspheric lens | Concave surface | Convex surface | 0.9≤f3/F≤1.9 |
| | L4 | Positive | Meniscus lens | Aspheric lens | Convex surface | Concave surface | 0.15≤R1/f4≤0.6 and 0.15≤R2/f4≤0.6 |
| | L6 | / | | | | | |

It should be understood that the optical lens assemblies shown in FIG. 1, FIG. 3, and FIG. 5 are merely used as three possible example structures to describe the optical lens assembly provided in this application, and should not constitute a limitation on embodiments of this application. A new optical lens assembly obtained based on appropriate deformation, supplement, or combination of the optical lens assemblies shown in FIG. 1, FIG. 3, and FIG. 5 falls within the protection scope of this application.

**Correspondingly,** an embodiment of this application further provides an optical imaging apparatus. The optical imaging apparatus includes the optical lens assembly described in the foregoing embodiments.

Optionally, the optical imaging apparatus may further include:
an imaging sensor L6.

Optionally, the optical imaging apparatus may be an apparatus like a lidar or an image shooting apparatus (for example, a security night vision camera).

Optionally, the optical lens assembly described in the foregoing embodiments may also be applied to another optical imaging apparatus that needs to receive light. This is not limited in embodiments of this application.

This application further provides a terminal device. The terminal device includes an optical lens assembly or an optical imaging apparatus provided in this application. For example, the terminal device may be a transportation tool, for example, a transportation means used in any possible scenario, for example, a vehicle, a truck, an aircraft, an unmanned aerial vehicle, a slow transport vehicle, a spacecraft, or a ship, or may be any device that can carry a detection apparatus, for example, a surveying and mapping device. One or more optical lens assemblies or optical imaging apparatuses provided in this application are deployed on the terminal device.

The foregoing descriptions are merely specific implementations of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. An optical lens assembly, comprising:
a first lens, a second lens, a third lens, and a fourth lens that are sequentially coaxially disposed from an object side to an image side, wherein
the first lens, the third lens, and the fourth lens have positive focal power, and the second lens has negative focal power; and
the first lens is a meniscus lens, the second lens is a double-concave lens, the third lens is a meniscus lens, and the fourth lens is a meniscus lens.

2. The optical lens assembly according to claim 1, wherein an object side surface of the first lens is a convex surface, and an image side surface of the first lens is a concave surface; an object side surface of the second lens is a concave surface, and an image side surface of the second lens is a concave surface; an object side surface of the third lens is a concave surface, and an image side surface of the third lens is a convex surface; and an object side surface of the fourth lens is a convex surface, and an image side surface of the fourth lens is a concave surface.

3. The optical lens assembly according to claim 1 or 2, wherein the third lens is an aspheric lens.

4. The optical lens assembly according to any one of claims 1 to 3, wherein the optical lens assembly further comprises:
a light filter, wherein
the light filter is located on an object side of the first lens.

5. An optical lens assembly, comprising:
a first lens, a second lens, a third lens, and a fourth lens that are sequentially coaxially disposed from an object side to an image side, wherein
the first lens, the third lens, and the fourth lens have positive focal power, and the second lens has negative focal power; and
the first lens is a double-convex lens, the second lens is a double-concave lens, the third lens is a meniscus lens, and the fourth lens is a meniscus lens.

6. The optical lens assembly according to claim 5, wherein an object side surface of the first lens is a convex surface, and an image side surface of the first lens is a convex surface; an object side surface of the second lens is a concave surface, and an image side surface of the second lens is a concave surface; an object side surface of the third lens is a concave surface, and an image side surface of the third lens is a convex surface; and an object side surface of the fourth lens is a convex surface, and an image side surface of the fourth lens is a concave surface.

7. The optical lens assembly according to claim 5 or 6, wherein the first lens is an aspheric lens, and the third lens is an aspheric lens.

8. The optical lens assembly according to any one of claims 5 to 7, wherein the optical lens assembly further comprises:
a light filter, wherein
the light filter is located on an image side of the first lens and an object side of the second lens.

9. An optical lens assembly, comprising:
a first lens, a second lens, a third lens, and a fourth lens that are sequentially coaxially disposed from an object side to an image side, wherein
the first lens, the third lens, and the fourth lens have positive focal power, and the second lens has negative focal power; and
the first lens is a planoconvex lens, the second lens is a meniscus lens, the third lens is a meniscus lens, and the fourth lens is a meniscus lens.

10. The optical lens assembly according to claim 9, wherein an object side surface of the first lens is a convex surface, and an image side surface of the first lens is a plane; an object side surface of the second lens is a concave surface, and an image side surface of the second lens is a convex surface; an object side surface of the third lens is a concave surface, and an image side surface of the third lens is a convex surface; and an object side surface of the fourth lens is a convex surface, and an image side surface of the fourth lens is a concave surface.

11. The optical lens assembly according to claim 9 or 10, wherein the third lens is an aspheric lens, and the fourth lens is an aspheric lens.

12. The optical lens assembly according to any one of claims 9 to 11, wherein the optical lens assembly further comprises:
a light filter, wherein
the light filter is located on an object side of the first lens.

13. The optical lens assembly according to any one of claims 1 to 12, wherein a focal length of the first lens satisfies the following relationship: $1 \leq f 1 / F \leq 3.5 ,$ wherein
f1 is the focal length of the first lens, and F is a focal length of the optical lens assembly.

14. The optical lens assembly according to any one of claims 1 to 13, wherein a material of the first lens comprises a first material, and the first material is used to suppress a temperature drift of the first lens.

15. The optical lens assembly according to any one of claims 1 to 14, wherein a focal length of the second lens satisfies the following relationship: $- 2.5 \leq f 2 / F \leq - 1.5 ,$ wherein
f2 is the focal length of the second lens, and F is the focal length of the optical lens assembly.

16. The optical lens assembly according to any one of claims 1 to 15, wherein a focal length of the third lens satisfies the following relationship: $0.9 \leq f 3 / F \leq 1.9 ,$ wherein
f3 is the focal length of the third lens, and F is the focal length of the optical lens assembly.

17. The optical lens assembly according to any one of claims 1 to 16, wherein the object side surface and the image side surface of the fourth lens satisfy the following relationships: $0.15 \leq R 1 / f 4 \leq 0.6 and 0.15 \leq R 2 / f 4 \leq 0.6 ,$ wherein
R1 is a curvature radius of the object side surface of the fourth lens, R2 is a curvature radius of the image side surface of the fourth lens, and f4 is a focal length of the fourth lens.

18. The optical lens assembly according to any one of claims 1 to 17, wherein the focal length of the optical lens assembly satisfies the following relationship: $1.5 \leq T / F \leq 2.5 ,$ wherein
T is a distance, on an optical axis, from a center of the object side surface of the first lens to an imaging surface of the optical lens assembly, and F is the focal length of the optical lens assembly.

19. An optical imaging apparatus, comprising the optical lens assembly according to any one of claims 1 to 18 and an imaging sensor.

20. The optical imaging apparatus according to claim 19, wherein the optical imaging apparatus comprises at least one of the following: a lidar and an image shooting apparatus.

21. A vehicle, wherein the vehicle comprises the optical lens assembly according to any one of claims 1 to 18, or the optical imaging apparatus according to claim 19 or 20.
